(19)

Europäisches Patentamt
European Patent Office
Office européen des brevets

(11)  **EP 4 404 408 A1**

(12)  **EUROPEAN PATENT APPLICATION**

(43) Date of publication:
**24.07.2024  Bulletin 2024/30**

(21) Application number: **23204075.8**

(22) Date of filing: **17.10.2023**

(51) International Patent Classification (IPC):
*H02J 3/00* (2006.01)        *H02J 13/00* (2006.01)

(52) Cooperative Patent Classification (CPC):
**H02J 3/0012; H02J 13/00001; H02J 13/00002;**
H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **18.01.2023   JP 2023005548**

(71) Applicant: **Hitachi, Ltd.**
**Tokyo 100-8280 (JP)**

(72) Inventors:
• **KIRIHARA, Kenta**
**Tokyo 100-8280 (JP)**
• **IMAI, Hidetaka**
**Tokyo 100-8280 (JP)**

• **ITAI, Jun**
**Tokyo 100-8280 (JP)**
• **YATSU, Masahiro**
**Tokyo 100-8280 (JP)**
• **TANSO, Hiroshi**
**Tokyo 100-8280 (JP)**
• **UENO, Shintaro**
**Tokyo 100-8280 (JP)**
• **MOCHIZUKI, Ryota**
**Tokyo 100-8280 (JP)**
• **SUGIZAKI, Yoichi**
**Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54)    **POWER SYSTEM STABILIZATION SYSTEM AND POWER SYSTEM STABILIZATION METHOD**

(57)    Provided is a power system stabilization system (1) capable of suppressing computation resources while maintaining computation accuracy for evaluating a state of a power system. A power system stabilization system (1) includes a power system computation unit (2) that receives a power system state, a power system model, and an event case as inputs and executes at least one of simple event computation and event computation, and a margin setting unit (3) that receives a margin setting parameter as an input and calculates a screening margin from a result of the simple event computation and a result of the event computation for an event case targeted by the power system computation unit (2). By the margin setting unit (3) calculating the screening margin from the results of both the simple event computation and the event computation, a possibility of erroneous screening can be curbed to maintain the computation accuracy, a system state of an evaluation target can be reduced according to power flow computation, and computation resources can be suppressed.

FIG. 4

EP 4 404 408 A1

## Description

Technical Field

The present invention relates to a power system stabilization system and a power system stabilization method.

Background Art

In recent years, with an increase in number of renewable energy power sources linked to power systems and electrification of consumer equipment therewith, there has been concern regarding overload of power transmission lines occurring, which has not been taken into consideration heretofore.

A power system stabilization system (SPS: Special Protection Schemes) capable of eliminating an overload by using an output of a renewable energy power source as alternative energy even when the overload occurs in an electric system has attracted attention.

In typical recent power system stabilization systems, the influence of a change in a state of a power system is computed in advance through simulation, thereby allowing a countermeasure when an overload occurs to be prepared. On the other hand, it is known that the simulation of a power system has a very large computational scale when the power system scale is large. It is considered that this is caused by two reasons, that is, an increase in a computation process in power flow state computation accompanying enlargement of the power system scale and an increase in the number of assumed state changes, and thus a large amount of computation resources are required. Therefore, study on suppression of computation resources has been performed.

Patent Literature 1 discloses a computation method related to generation of a Thevenin equivalent circuit.

Patent Literature 2 discloses a method of utilizing two-stage screening.

Patent Literature 3 discloses a method of screening by using eigenvalue analysis.

Citation List

Patent Literature

Patent Literature 1: US 2017/0025853 A
Patent Literature 2: US 2020/0258168 A
Patent Literature 3: US 6,496,757 A

Summary of Invention

Technical Problem

In the method disclosed in Patent Literature 1, a computational scale is reduced by simplifying a target model in analyzing a power system. Such a method is suitable for analyzing a wide-area phenomenon, but simplifies a connection configuration of a power system. Thus, it is difficult to evaluate an overload generated in a power system by using the method disclosed in Patent Literature 1.

Patent Literature 2 introduces a method of reducing constraint conditions in optimal power flow computation through two-stage screening, but it is difficult to apply the method disclosed in Patent Literature 2 to evaluation of a state change required by a system stabilization system. The method disclosed in Patent Literature 3 can be used for analyzing voltage stability of a power system, but cannot be used for analyzing an overload of the power system.

As described above, in order to suppress computation resources of a power system stabilization system, it is necessary to improve the computation accuracy required for a use case and also to reduce the number of computation resources. In a system having a large social influence, such as a system stabilization system, it is more important to increase the computation accuracy.

In view of these points, an object of the present invention is to provide a power system stabilization system and a power system stabilization method capable of suppressing computation resources while maintaining computation accuracy of evaluating a state of a power system.

Solution to Problem

In order to solve the above problem, for example, the configuration described in the claims is adopted.

The present application includes a plurality of means for solving the above problems. As an example, the power system stabilization system of the present invention includes power system computation unit that receives a power system state, a power system model, and an event case as inputs and executes at least one of simple event computation and event computation; and a margin setting unit that receives a margin setting parameter as an input and calculates a screening margin from a result of the simple event computation and a result of the event computation for an event case targeted by the power system computation unit.

Advantageous Effects of Invention

According to the present invention, a possibility of erroneous screening can be curbed to maintain the computation accuracy, a system state of an evaluation target can be reduced according to power flow computation, and computation resources can be suppressed.

Problems, configurations, and effects other than those described above will become apparent through the following description of embodiments.

Brief Description of Drawings

Fig. 1 is a configuration diagram illustrating an example of a power system to which a power system stabilization system according to a first embodiment of the present invention is applied.

Fig. 2 is a diagram illustrating an example of an event of the power system to which the power system stabilization system according to the first embodiment of the present invention is applied.

Fig. 3 is a diagram illustrating a hardware configuration example of the power system stabilization system according to the first embodiment of the present invention.

Fig. 4 is a functional block diagram of the power system stabilization system according to the first embodiment of the present invention.

Fig. 5 is a flowchart illustrating the entire processing performed by the power system stabilization system according to the first embodiment of the present invention.

Fig. 6 is a flowchart illustrating processing of a margin setting unit of the power system stabilization system according to the first embodiment of the present invention.

Fig. 7 is a diagram illustrating an example of a difference between simple power flow computation and power flow computation performed by the power system stabilization system according to the first embodiment of the present invention.

Fig. 8 is a diagram illustrating an example in which a margin is set for each event by the power system stabilization system according to the first embodiment of the present invention.

Fig. 9 is a diagram illustrating an example in which a margin is set for each voltage class by the power system stabilization system according to the first embodiment of the present invention.

Fig. 10 is a flowchart illustrating processing of an event case screening unit of the power system stabilization system according to the first embodiment of the present invention.

Fig. 11 is a diagram illustrating an example of an event evaluation result of the power system stabilization system according to the first embodiment of the present invention.

Fig. 12 is a diagram illustrating a display example of an event evaluation result of the power system stabilization system according to the first embodiment of the present invention.

Fig. 13 is a block diagram illustrating an example of a power system stabilization system according to a second embodiment of the present invention.

Description of Embodiments

<First Embodiment>

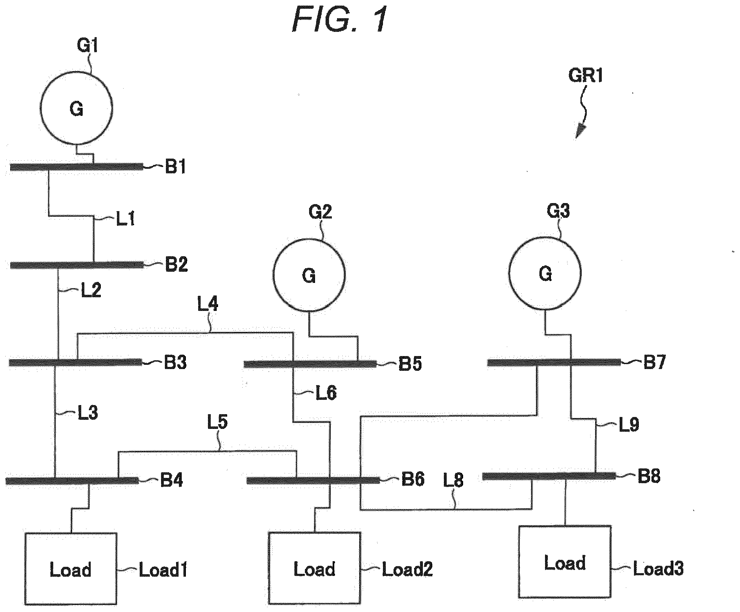

Hereinafter, a power system stabilization system and a power system stabilization method according to a first embodiment of the present invention will be described with reference to Figs. 1 to 12.

[Example of power system]

Fig. 1 is a diagram schematically illustrating a connection configuration of a power system to which a power system stabilization system according to a first embodiment of the present invention is applied.

A power system GR1 illustrated in Fig. 1 includes generators G1 to G3, loads Load1 to Load3, bus bars B1 to B8, and power transmission lines L1 to L9. The power system GR1 is used to supply power to the loads Load1 to Load3, and for example, the power system GR1 supplies power to the loads Load1 to Load3 by changing outputs of the generators G1 to G3 when an event occurs in the power system.

[Example of event]

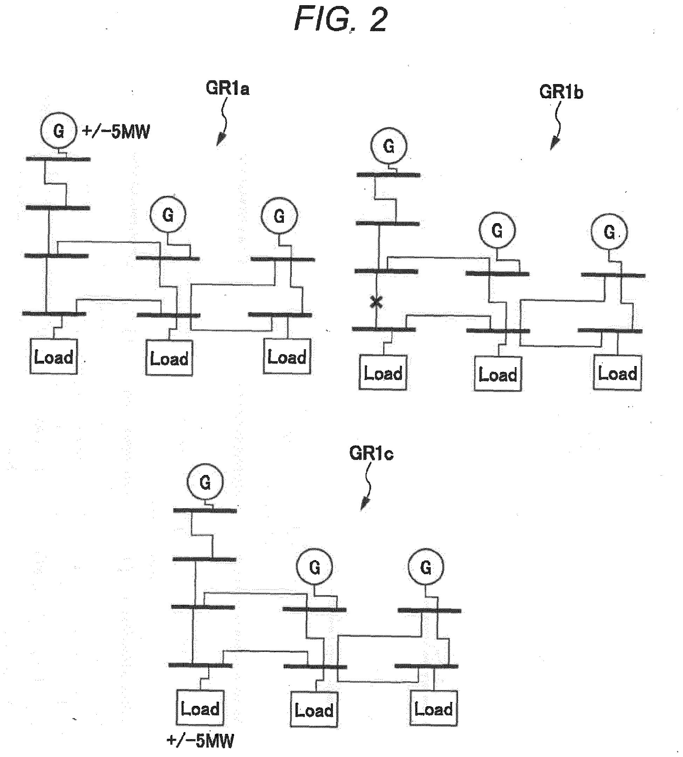

Fig. 2 illustrates an example of types of events that may occur in the power system GR1.

In the power system, various events occur due to various factors. For example, in a case where the generator G1 is a renewable energy power source as illustrated as a power system GR1a in Fig. 2, an output of the generator G1 rises and falls. As illustrated as a power system GR1b in Fig. 2, a power transmission line at a specific location is opened (location indicated by ×) due to a lightning strike, and the system configuration may be changed. As illustrated as a power system GR1c in Fig. 2, a specific load may sharply increase due to a cold wave. In any event, a power flow flowing to each power transmission line and a voltage at each bus bar change.

A device of the power system is designed on the premise that a voltage and a transmission power flow are operated within a predetermined range. Therefore, when the voltage and the transmission power flow exceed design values for a certain period of time, a protection device for preventing damage of the device operates, and chain events may occur. Therefore, in the power system stabilization system, it is necessary to take appropriate countermeasures against such an assumed event when the event occurs.

[Hardware configuration of power system stabilization system]

Next, a hardware configuration of a power system stabilization system 1 will be described.

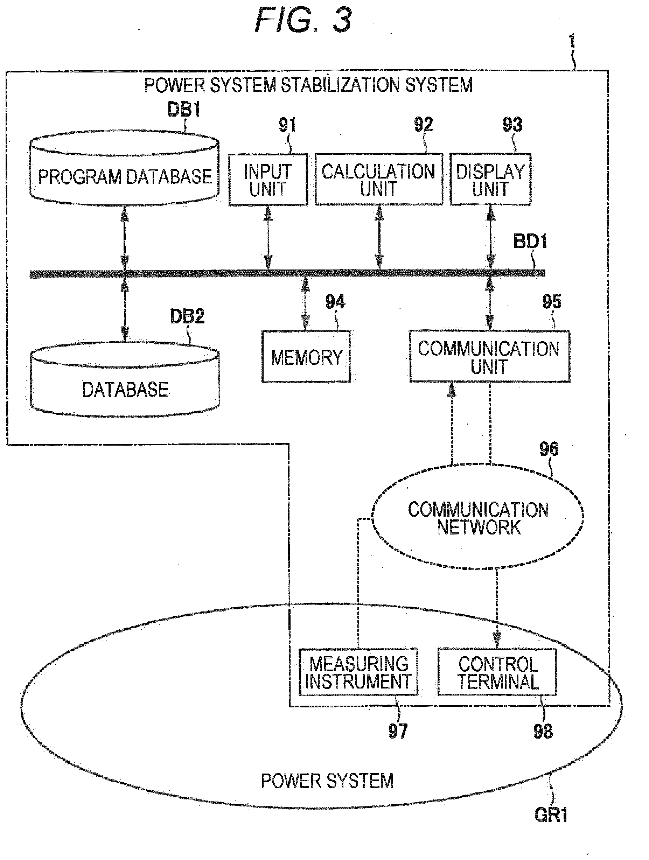

Fig. 3 illustrates an example of a hardware configuration of the power system stabilization system 1. The power system stabilization system 1 is configured with, for example, a computer, and includes a program database DB1, a database DB2, an input unit 91, a calculation unit 92, a display unit 93, a memory 94, and a communication unit 95. The constituents of the power system stabilization system 1 can exchange data with each other via a bus BD1.

A measuring instrument 97 and a control terminal 98 are connected to the computer configuring the power system stabilization system 1 via a communication network 96. The measuring instrument 97 and the control terminal 98 are also constituents configuring the power system stabilization system 1.

The program database DB1 stores a set of programs for a computation process related to the power system stabilization system 1.

The database DB2 stores results of the computation process and the like.

The input unit 91 includes, for example, an input device such as a keyboard, a mouse, a stylus, or a microphone.

The calculation unit 92 includes, for example, a central processing unit (CPU), a graphic processing unit (GPU), a field programmable gate array (FPGA), a tensor processing unit (TPU), and the like, and is used to execute a calculation process.

The display unit 93 such as a monitor or a speaker displays input data and a calculation result of the system.

In the memory 94, programs are stored when various programs are executed, and intermediate results in the calculation unit 92 are stored.

The communication unit 95 performs data communication with the measuring instrument 97 and the control terminal 98 via the communication network 96.

The program database DB1, the database DB2, the input unit 91, the calculation unit 92, the display unit 93, the memory 94, and the communication unit 95 mutually transmit and receive data via the bus BD1. For example, a result from the calculation unit 92 is transmitted to and received from the memory 94, data of the memory 94 is transmitted to and received from the display unit 93, and the like. In this case, the bus BD1 is not necessarily a physical bus of one computer, and may play a similar role when a plurality of computers are combined.

The measuring instrument 97 is installed in the power system, and measures, for example, one or more of an effective value, a phasor type, and a three-phase instantaneous value for each of a voltage, a current, a voltage phase, a frequency, and a current phase. Examples thereof include SV/TM and PMU, and measured data is transmitted to the communication unit 95 of the power system stabilization system 1 via the communication network 96.

The control terminal 98 includes a relay or the like that can change the configuration of the power system, and can change a state of the power system.

[Configuration viewed from function of power system stabilization system]

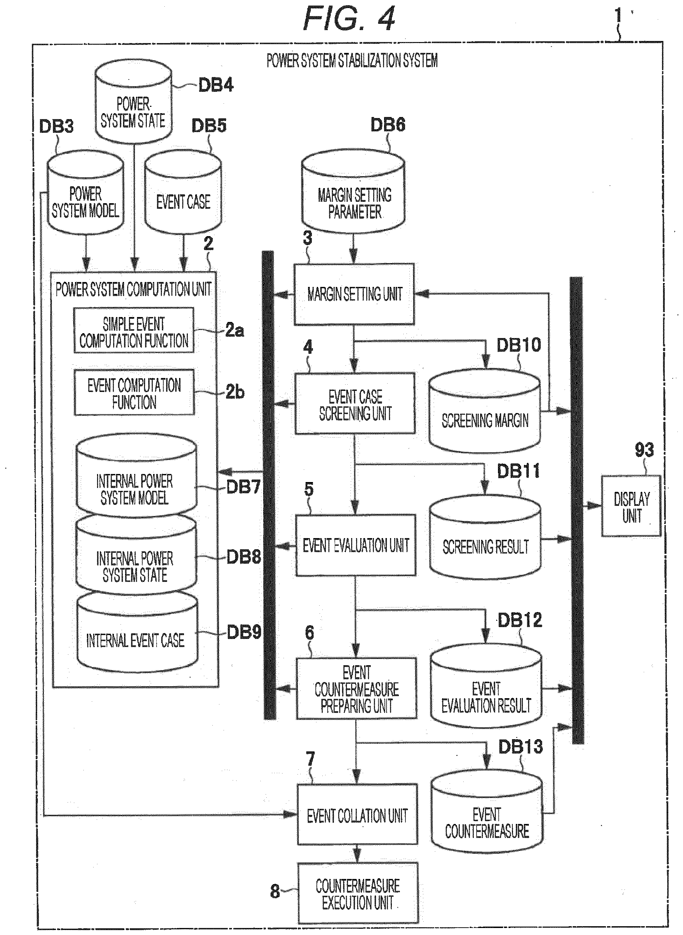

Fig. 4 is a functional block diagram of the power system stabilization system 1.

The power system stabilization system 1 is a system operated by a computer. As input data of the power system stabilization system 1, various types of data from a power system model DB3, a power system state DB4, an event case DB5, a margin setting parameter DB6, and the like are used. Output data of the power system stabilization system 1 includes a screening margin DB10, a screening result DB11, an event evaluation result DB12, and an event countermeasure DB13.

The power system stabilization system 1 includes, as processing units, a power system computation unit 2, a margin setting unit 3, an event case screening unit 4, an event evaluation unit 5, an event countermeasure preparing unit 6, an event collation unit 7, and a countermeasure execution unit 8.

Here, input data of the power system stabilization system 1 will be described.

The power system model DB3 is obtained by modeling and storing, for example, a configuration and constituents of the power system such as impedance of the power transmission line, a position of a load, and upper and lower limits of a generator.

The power system state DB4 represents a state of the power system, and the power system state DB4 stores, for example, at least one of a voltage and a voltage phase of each bus bar, active power and reactive power flowing through a power transmission line or a transformer, and an on/off state of a power transmission device.

The event case DB5 stores a list of events in a target power system. As described above, the list of events includes a failure of a device, an increase in power demand and a power generation amount, and the like. In the present embodiment, a power transmission line failure is regarded as an event.

The margin setting parameter DB6 stores a parameter designating a group for which a margin is set. For example, one or more of margin setting parameters may be designated for each power transmission line voltage class, for each event, for each power transmission line, for each power transmission line owner, for each time, and the like.

Depending on methods of setting a margin setting parameter, for example, an improvement in a screening rate according to a situation can be expected.

Next, output data of the power system stabilization system 1 will be described.

A screening margin DB10 is a margin for correcting a result of simple event computation when the simple event computation is executed, and may be set for each power transmission route characteristic or event characteristic.

The screening result DB11 is a screened event and a simple event evaluation result used for screening according to a correction result of the simple event computation and a screening margin.

An event evaluation result DB12 is a result of evaluating the screened event through simple event computation.

An event countermeasure DB13 is obtained by preparing a countermeasure against the event on the basis of the event evaluation result.

The power system computation unit 2 has a function of computing an assumed state of the power system. That is, the power system computation unit 2 has a simple event computation function 2a and an event computation function 2b as internally held functions, and performs a power system computation process.

An internal power system model DB7, an internal power system state DB8, and an internal event case DB9 are included as internally held data of the power system computation unit 2.

The power system computation unit 2 reads the power system model DB3, the power system state DB4, and the event case DB5. The power system computation unit 2 can smoothly execute subsequent processes by storing each as an internal power system model DB7, an internal power system state DB8, and an internal event case DB9.

In the present embodiment, the power system computation unit 2 executes power flow computation according to the DC method as a simple event computation function 2a, and executes power flow computation according to the AC method as an event computation function 2b. However, it is an example that the power system computation unit 2 executes power flow computation according to the DC method as the simple event computation function 2a and executes power flow computation according to the AC method as the event computation function 2b, and other two types of power flow computation having different calculation scales other than the DC method and the AC method may be executed as the simple event computation function 2a and the event computation function 2b.

For example, in the event computation function 2b, the event computation may be performed by using one or more of a power flow computation function, a circuit computation function, transient stability computation, voltage stability computation, and a short circuit computation function of the power system.

In the simple event computation function 2a, the number of computation processes of the event computation function 2b is reduced, and the event computation may be performed by using one or more of degeneration of the model, reduction of the number of computation steps, relaxation of calculation conditions, reduction of the computation accuracy, a change of the numerical accuracy, and creation of a substitute model.

The margin setting unit 3 uses a margin setting parameter DB6. as an input, and calls the simple event computation function 2a and the event computation function 2b of the power system computation unit 2 to calculate the screening margin DB10. The margin setting unit 3 calculates the screening margin DB10 for each group set by the margin setting parameter DB6, for example.

The event case screening unit 4 uses the screening margin DB10 as an input, and calls the simple event computation function 2a of the power system computation unit 2 to calculate the screening result DB11. Here, the event case screening unit 4 calculates a screening result by adding a margin to a result of the simple event computation function of the power system computation unit 2.

The event evaluation unit 5 uses the screening result DB11 as an input and generates the event evaluation result DB12 by using the event computation function of the power system computation unit 2.

The event countermeasure preparing unit 6 calculates the event countermeasure DB13 with the event evaluation result DB12 as an input.

The event collation unit 7 collates the event from the power system state DB4 and transmits a target countermeasure to the countermeasure execution unit 8.

The countermeasure execution unit 8 executes the countermeasure collated by the event collation unit 7. Note that, when executing a countermeasure, the countermeasure execution unit 8 controls the control terminal 98.

[Processing performed by power system stabilization system]

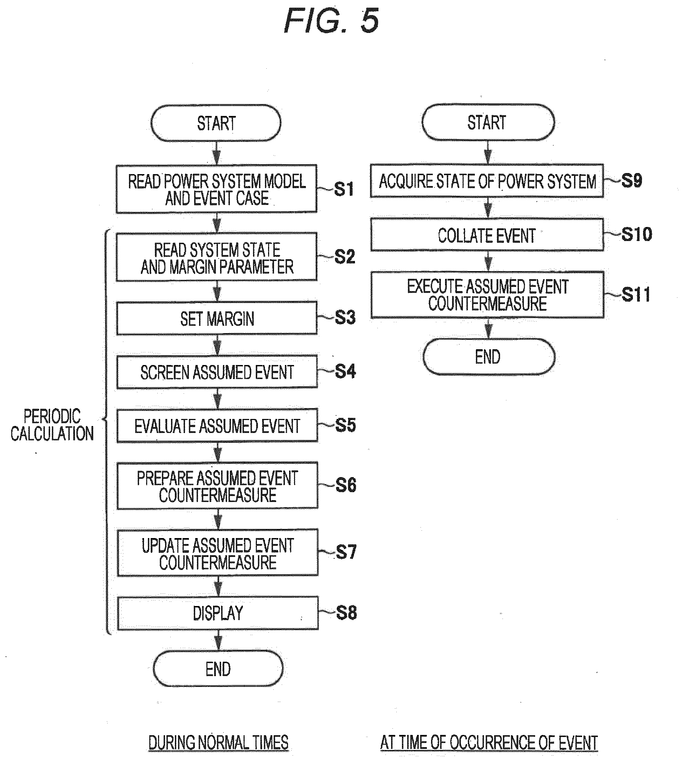

Fig. 5 is a flowchart illustrating an example of overall processing of the power system stabilization system 1.

In Fig. 5, an operation of the power system stabilization system 1 will be described as different flowcharts for the normal time and the event occurrence time. However, the operation may be described as a series of continuous flowcharts on the assumption that the normal time and the event occurrence time occur continuously.

First, an operation in normal times illustrated in the flowchart on the left part of Fig. 5 will be described. The power system computation unit 2 reads the power system model DB3 and the event case DB5 (step S1). Next, the power system computation unit 2 and the margin setting unit 3 read the power system state DB4 and the margin setting parameter DB6 (step S2). The margin setting unit 3 sets a margin (step S3).

Next, the event case screening unit 4 screens an event (step S4). The event evaluation unit 5 evaluates the event (step S5). The event countermeasure preparing unit 6 prepares an event countermeasure (step S6).

The countermeasure execution unit 8 updates an event countermeasure to be executed to the event countermeasure prepared by the event countermeasure preparing unit 6 (step S7). The display unit 93 displays various results such as the event countermeasure (step S8). A display example performed here will be described later.

Note that the processes from step S2 to step S8 are repeatedly executed through periodic calculation.

Next, a flow of processing when an event occurs illustrated in the flowchart on the right part of Fig. 5 will be described.

First, the power system computation unit 2 acquires a state of the power system (step S9). Next, the event collation unit 7 collates the event (step S10). The countermeasure execution unit 8 executes the event countermeasure on the basis of the collation in the event collation unit 7 (step S11).

As described above, by executing the series of processes illustrated in the flowchart of Fig. 5, computation resources can be suppressed, and more events can be handled. Event countermeasures can be prepared earlier.

[Processing performed by margin setting unit]

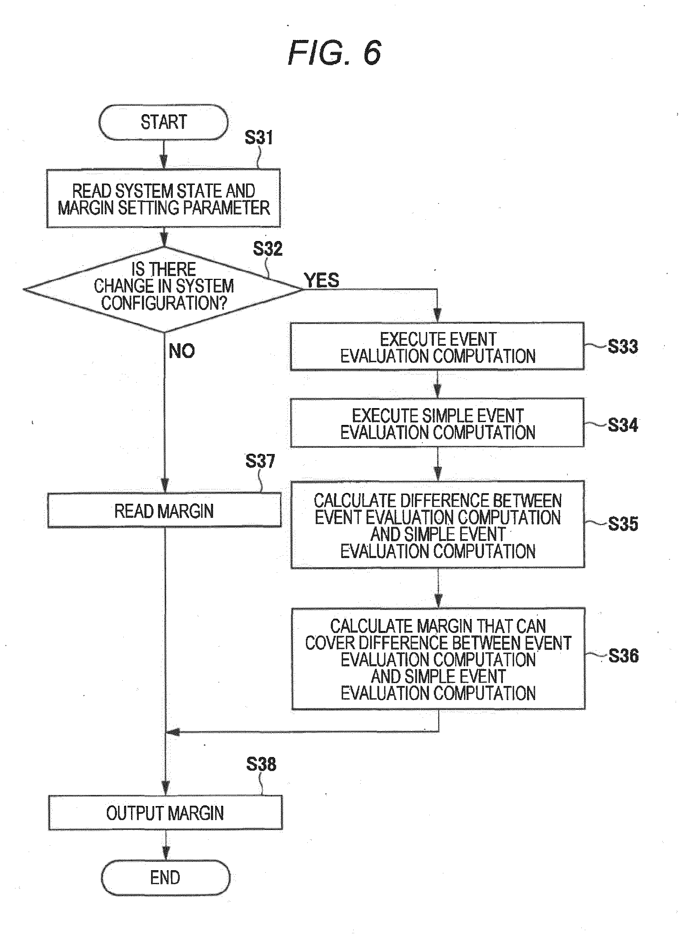

Fig. 6 is a flowchart illustrating details of processing performed by the margin setting unit 3.

First, the margin setting unit 3 reads a power system state from the power system computation unit 2 and acquires the margin setting parameter DB6 (step S31). The margin setting unit 3 checks a system configuration of the acquired power system state and determines whether there is a change in the system configuration (step S32).

In a case where there is a change in the system configuration in step S32 (YES in step S32), the margin setting unit 3 executes event evaluation computation by using the event computation function 2b (step S33). The margin setting unit 3 executes simple event evaluation computation by using the simple event computation function 2a (step S34). Thereafter, the margin setting unit 3 calculates a difference between an event evaluation computation result and a simple event evaluation computation result (step S35). The margin setting unit 3 calculates a margin from the difference between the simple event evaluation computation result and the event evaluation computation result on the basis of the margin setting parameter (step S36).

In a case where there is no change in the system configuration in step S32 (NO in step S32), the margin setting unit 3 rereads the calculated margin (step S37).

The margin setting unit 3 outputs the obtained margin after calculating the margin in step S36 and after rereading the margin in step S37 (step S38).

In the simple event evaluation computation in step S33 and the event evaluation computation in step S34, for example, the margin setting unit 3 executes the event due to the power transmission line opening of the power system according to the DC power flow computation and the AC power flow computation, respectively.

In the DC power flow computation, it is assumed that a voltage of the power system is constant, and the margin setting unit 3 linearizes a resistance component of a power transmission route and a nonlinear element of a power flow equation to obtain a power flow of the power system. In a case where appropriate measures are taken, the above-described event of the power system can be evaluated without repetitive computation, and thus it is advantageous in evaluating a plurality of events. On the other hand, there is an error in the power flow computed according to the DC power flow computation.

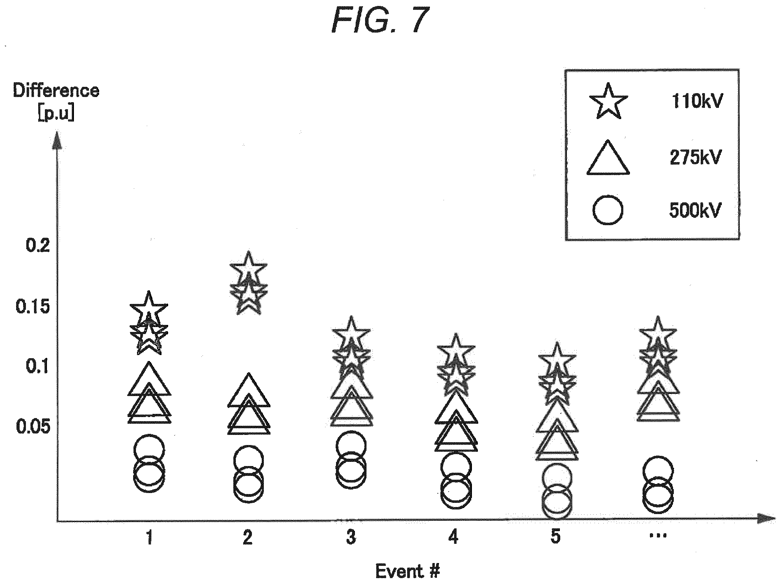

Here, an example of obtaining a difference between the event evaluation computation result and the simple event evaluation computation result in step S35 will be described with reference to Fig. 7.

In step S35 in Fig. 6, the margin setting unit 3 obtains a difference between the simple event evaluation computation and the event evaluation computation for each event.

The example in Fig. 7 illustrates a value (a vertical axis in Fig. 7) of a difference between the simple event evaluation computation and the event evaluation computation for an event (a horizontal axis in Fig. 7).

Here, Fig. 7 illustrates an error of apparent power S of the power transmission route as an example, but the error may be active power P. When the apparent power S is utilized, in a case where reactive power Q after the event cannot be obtained through simple event evaluation, the reactive power Q before the event may be used for correction.

Fig. 7 illustrates an error for each event and for each voltage class of the power transmission route. That is, in Fig. 7, the voltage class is divided into 110 kV (a value indicated by the star in Fig. 7), 275 kV (a value indicated by the triangle in Fig. 7), and 500 kV (a value indicated by the circle in Fig. 7).

As can be seen from Fig. 7, the error tends to increase in a specific voltage class and a specific event. This is due to the principle of the simple event evaluation and the event evaluation described above. Here, the margin is for ascertaining an error between simple event evaluation and event evaluation, and is stored in various formats.

As an example, a case where a margin is set for each event (for each group) will be described.

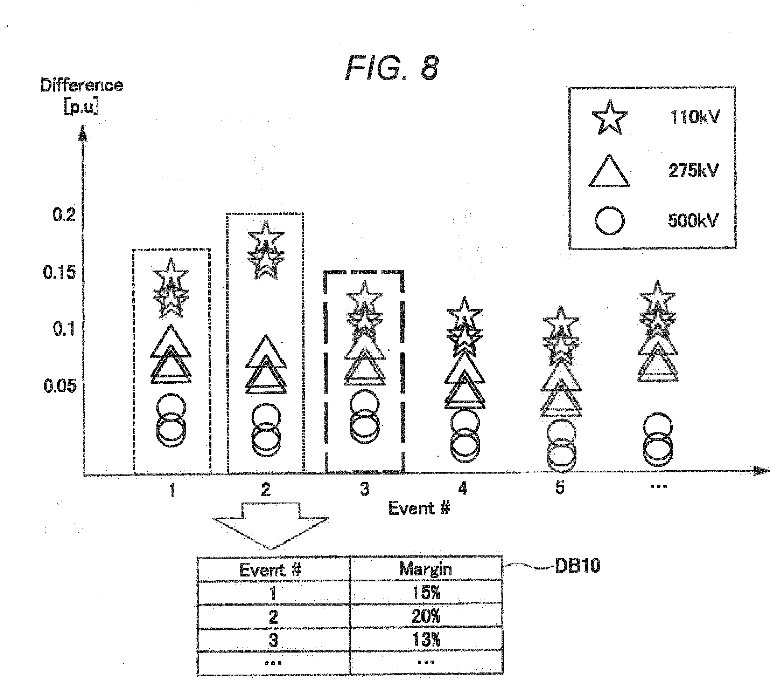

Fig. 8 illustrates an example in which a margin is set for an event.

In the example in Fig. 8, in event 1, the highest value of the corresponding margin is 0.15 (15%). In event 2, the highest value of the corresponding margin is 0.20 (20%). As described above, the screening margin DB10 illustrated in Fig. 8 indicates the maximum error between the simple event evaluation and the event evaluation for each event.

As described above, by ascertaining the maximum error between the simple event evaluation and the event evaluation for each event, a result of the simple event evaluation can be a reliable index for each event.

For example, in a case where the event is the power transmission line opening, an error differs for each event, and thus it can be understood that this index is effective means. By ascertaining the maximum error for each event as described above, it is possible to obtain a reliable index of the result of the simple event evaluation for each event. For example, in a case where the event is the power transmission line opening, the error differs for each event, and thus it can be seen that it is an effective means.

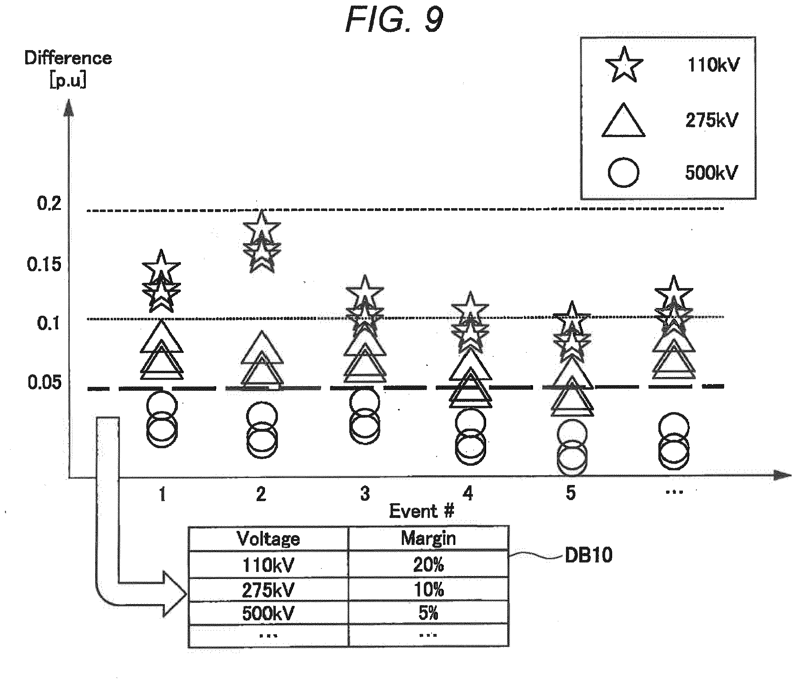

Fig. 9 illustrates an example in which a margin is set for each voltage class of the power transmission route. That is, the voltage class of the power transmission route is divided into 110 kV (a value indicated by the star in Fig. 9), 275 kV (a value indicated by the triangle in Fig. 9), and 500 kV·(a value indicated by the circle in Fig. 9), and the highest value among the respective voltage classes is set as a margin of the voltage class.

For example, for the voltage class of 110 kV, the highest value of the margin of the corresponding voltage class is 0.20 (20%). For the voltage class of 275 kV, the highest value of the margin of the corresponding voltage class is 0.10 (10%). For the voltage class of 500 kV, the highest value of the margin of the corresponding voltage class is 0.05 (5%).

By providing an appropriate margin for each voltage class as described above, it is possible to avoid erroneous determination (false negative or false positive) due to a uniform margin. By setting the margin for each voltage class, the explanatory property is improved as compared with that for each event.

Note that, in the above description, each event and each voltage class have been described separately, but processes for both may be combined, and the margin may be set by using at least one of a geographical region, a power transmission line owner, the number of power transmission line lines, and the like.

As described above, by setting the margin for each event and each voltage class, the power system stabilization system 1 according to the present embodiment can consider an error in simple event evaluation.

[Processing performed by event case screening unit]

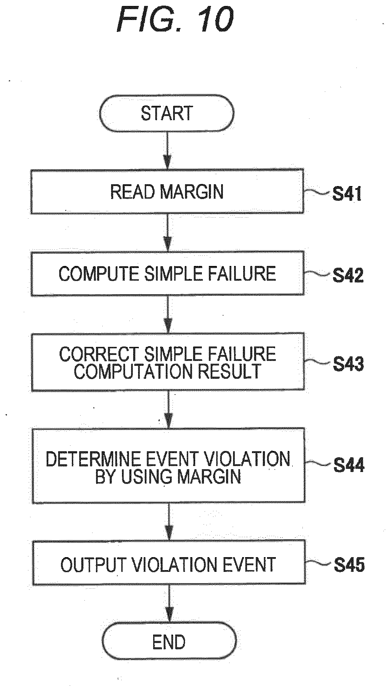

Fig. 10 is a flowchart illustrating details of processing in the event case screening unit 4.

First, the event case screening unit 4 reads a margin (step S41).

Next, the event case screening unit 4 executes simple event computation by using the simple event computation function 2a (step S42). The event case screening unit 4 corrects a result of simple event computation (step S43). The event case screening unit 4 determines an event violation by using the margin (step S44). The event case screening unit 4 outputs the violation event (step S45).

As described above, the evaluation based on the simple event computation does not require a computation resource, but there is a risk of erroneous determination due to an error from the time of event evaluation. Here, as in the present embodiment, by fixing a margin once for each system configuration, it is possible to reduce a reasonable calculation scale while suppressing the risk of erroneously screening an event in which a violation occurs.

In a case where a region for which a margin is set is exceeded, the event evaluation unit 5 executes only a screening result by using the event evaluation function, so that a computation resource can be allocated only to an important event.

[Examples of screening result and event evaluation result]

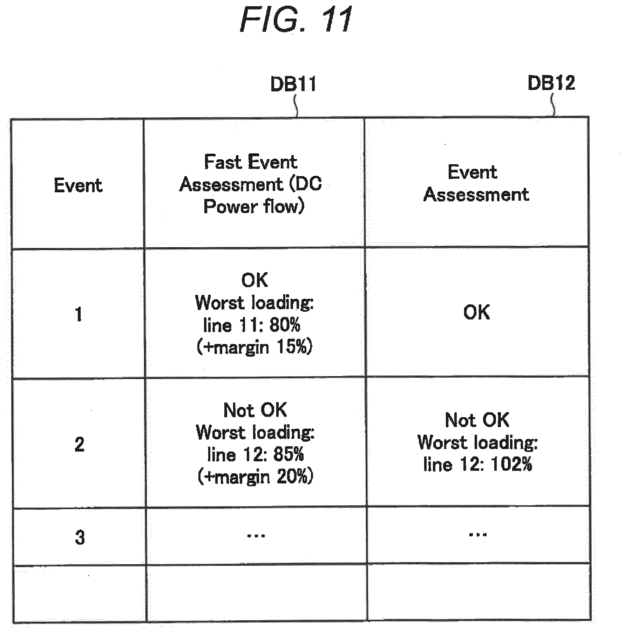

Next, examples of a screening result and an event evaluation result will be described with reference to Fig. 11.

In the example in Fig. 11, a maximum overload amount of the power transmission line is summarized for each event for a power system operator. That is, an event case in which detailed computation of the simple event evaluation result (center part) included in the screening result DB11 is required and an event case in which detailed computation of the event evaluation result DB12 (right part) is required are indicated to the power system operator.

By displaying this information on the display unit 93, the reason why a specific event has been screened becomes clear from the information on the event cases in which detailed computation is required, so that the power system operator can clearly ascertain the basis of screening.

For example, in the example in Fig. 11, although the overload rate of 85% is computed, event 2 is excluded from a screening target since there is a margin of 20%. Thus, the power system operator can find that the event evaluation result indicates an overload. On the other hand, in the case of event 1, although an overload of 80% is computed, addition of a margin of 15% does not cause an overload, and thus event 1 is excluded from a screening target.

As described in the flowchart of Fig. 5, for a case where a countermeasure is required as a result of the event evaluation, the countermeasure execution unit 8 computes a countermeasure for eliminating the violation in step S6 and updates the countermeasure in step S7. In step S8, the display unit 93 performs display. When an event occurs, the event collation unit 7 collates the event, so that a countermeasure prepared in advance can be executed.

[Examples of screening result and event evaluation result]

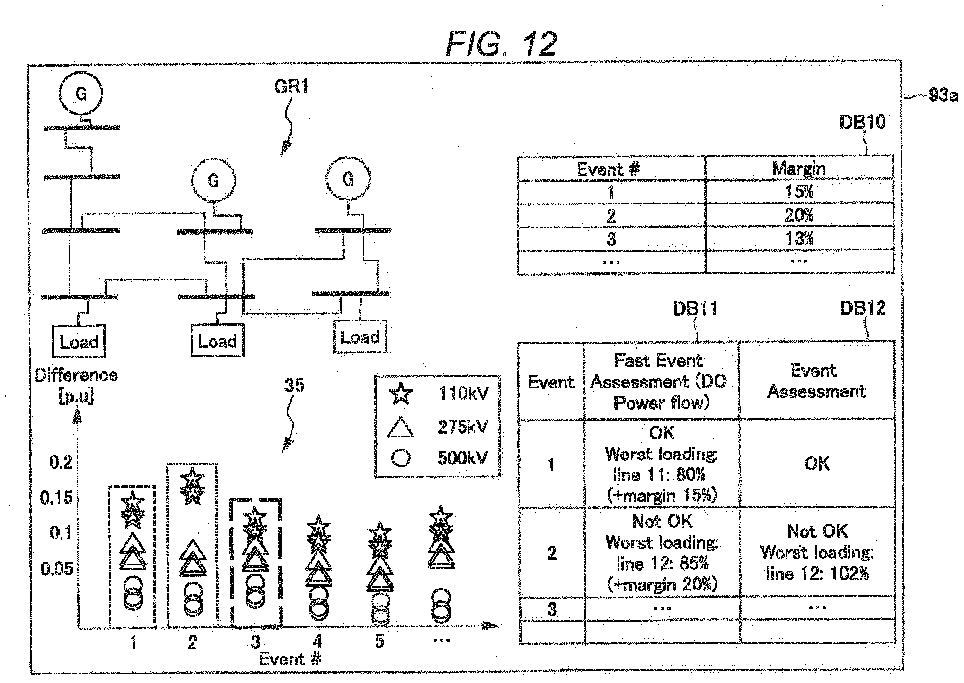

Next, an example of a display screen 93a of the display unit 93 will be described with reference to Fig. 12.

The display screen 93a illustrated in Fig. 12 displays the target power system GR1, display 35 of the margin for each voltage class in a case where the margin illustrated in Fig. 8 is set for the event, the screening margin DB10 as a screening result, and the screening result and the event evaluation result illustrated in Fig. 11.

Although Fig. 12 illustrates an example in which these are displayed simultaneously, at least one of these may be displayed, and any display may be omitted. Alternatively, a plurality of screens may be provided, and these display elements may be displayed on individual screens.

In addition to the display elements displayed in Fig. 12, details of countermeasures for eliminating a violation may be displayed.

<Second Embodiment>

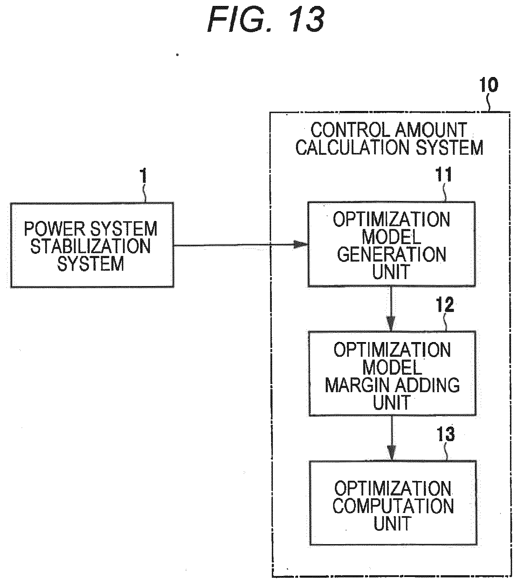

Next, a power system stabilization system and a power system stabilization method according to a second embodiment of the present invention will be described with reference to Fig. 13.

In a configuration of the present embodiment illustrated in Fig. 13, a power system stabilization system 1 is the same as the power system stabilization system 1 described in the first embodiment with reference to Figs. 1 to 12.

The second embodiment of the present invention is different from the first embodiment in that a control amount calculation system 10 to which a result (margin) obtained by the power system stabilization system 1 is supplied is provided.

In the control amount calculation system 10 illustrated in Fig. 13, a preventive control function that avoids an influence of an event before the event occurs calculates control.

As illustrated in Fig. 13, the control amount calculation system 10 includes an optimization model generation unit 11, an optimization model margin adding unit 12, and an optimization computation unit 13.

The optimization model generation unit 11 uses a screening margin, a power system state, a power system model, and an event case output by the power system stabilization system 1 as inputs, to generate an optimization model having simplified constraint conditions.

The optimization model margin adding unit 12 gives a margin to the optimization model by using the screening margin of the optimization model generation unit 11.

The optimization computation unit 13 calculates a solution of the optimization model and calculates a control point at which all possible violations can be avoided.

Here, when a control point at which all possible violations can be avoided is calculated, the control point can be obtained by minimizing an evaluation index of a function for evaluating a control amount as in the following equation.

[Math. 1]

$$\text{Min } f(C)$$
$$\text{s.t } g(V, \theta, C) = b$$
$$A(V, \theta, C) \leq b$$

Here, f(C) is an objective function for evaluating the control amount, and s.t g (V, θ, C) = b is an equality constraint calculated from the voltage (V), the phase (θ), and the control amount (C). A (V, θ, C) ≤ b is an inequality constraint calculated from the voltage (V), the phase (θ), and the control amount (C).

Examples of the objective function include a control amount of a generator, the number, of times of control of a device, the cost by the control, and the like. Similarly, examples of the equality constraint include matching between inflow power and output power of the power system.

As the inequality constraint, for example, in a case where a plurality of time cross-sections are considered, the control amount between the time cross-sections is within a predetermined range, and the control amount is within a specific range. The power flow equation is a type of equality constraint, and is known to mainly include a nonlinear element. In this technical field, it is also referred to as an optimal power flow (OPF).

In solving the above-described optimization problem, conventionally, it is conceivable to linearize a nonlinear element for which a solution is to be obtained while being non-linear or to change a form to exclude a nonlinear element as much as possible. In a case where a solution is obtained while being non-linear, the optimization problem has a non-convex form, and thus, in general, a possibility of convergence to a useful solution is low.

In a case where the form of the optimization problem is brought close to linear, it takes more computation time than in a case where the optimization problem is simply linearized. In an environment with limited computation resources, there is a need to execute computation in a state in which constraint conditions are linearized as much as possible. However, as described above, since linearization involves an error, there is a possibility that a control point satisfying the constraints cannot be calculated.

Therefore, in the present embodiment, a margin can be added to a linearized constraint expression by using a screening margin of the margin setting unit 3 (Fig. 4) of the power system stabilization system 1.

In the control amount calculation system 10, the optimization model generation unit 11 uses the screening margin, the power system state, the power system model, and the event case output by the power system stabilization system 1 as inputs, and generates an optimization model having simplified constraint conditions. The optimization model margin adding unit 12 gives a margin to the optimization model by using the screening margin, and the optimization computation unit 13 calculates a solution of the optimization model.

Specifically, a control amount is calculated by adding a margin to the above-described optimization model.

[Math. 2]

$$\text{Min } f(C)$$

$$\text{s.t } g'(V, \theta, C, M) = b$$

$$A(V, \theta, C) \leq b$$

Here, s.t g' $(V, \theta, C, M) = b$ is a simplified constraint condition and is a state in which a margin (M) is added to the optimization model. By generating the model as described above, for example, a solution space can be narrowed while the linearized state is stored, and thus convergence and time to convergence are shortened.

<Modification examples>

Note that the embodiment described so far have been described in detail in order to describe the present invention in an easy-to-understand manner, and not necessarily limited to including all the described configurations. The configurations and processes described in the above embodiments can be variously modified or changed.

In the above-described embodiments, the CPU is used as a calculation unit (Fig. 3), but other calculation processing units may be used. For example, as the calculation unit 92, some or all of the processing functions.may be realized by dedicated hardware such as a field programmable gate array (FPGA) or an application specific integrated circuit (ASIC).

In the configuration diagrams of Figs. 3 and 4, only control lines and information lines considered to be necessary for the description are illustrated, and not all control lines and information lines on a product are necessarily illustrated. In practice, it may be considered that almost all the configurations are connected to each other. Also in the flowcharts of Figs. 5, 6, and 10, in a case where the processing results are the same, the processing order may be changed, or a plurality of processes may be executed simultaneously.

Although a program for executing the processes described in the flowcharts of Figs. 8 and 9 is required to be installed in the calculation unit (CPU), the program may be prepared in a memory that stores the program database DB1, or may be transferred to the power system stabilization system 1 from a recording medium such as an external memory, an IC card, an SD card, or an optical disk.

Reference Signs List

1 Power system stabilization system
2 Power system computation unit
2a Simple event computation function
2b Event computation function
3 Margin setting unit
4 Event case screening unit
5 Event evaluation unit
6 Event countermeasure preparing unit
7 Event collation unit
8 Countermeasure execution unit
10 Control amount calculation system
11 Optimization model generation unit
12 Optimization model margin adding unit
13 Optimization computation unit
35 Display
91 Input unit
92 Calculation unit
93 Display unit
93a Display screen
94 Memory
95 Communication unit
96 Communication network
97 Measuring instrument
98 Control terminal
B1 Bus bar
BD1 Bus
DB1 Program database
DB2 Database
DB3 Power system model
DB4 Power system state
DB5 Event case
DB6 Margin setting parameter
DB7 Internal power system model
DB8 Internal power system state
DB9 Internal event case
DB10 Screening margin
DB11 Screening result
DB12 Event evaluation result
DB13 Event countermeasure
G1 Generator
GR1, GR1a, GR1b, GR1c Power system
L1 Power transmission line

**Claims**

1. A power system stabilization system (1) comprising:

a power system computation unit (2) that receives a power system state, a power system model, and an event case as inputs and executes at least one of simple event computation and event computation; and

a margin setting unit (3) that receives a margin setting parameter as an input and calculates a screening margin from a result of the simple event computation and a result of the event computation for an event case targeted by the power system computation unit (2).

2. The power system stabilization system (1) according to claim 1, **characterized in that** the margin setting unit (3) calculates a screening margin for each group set by the margin setting parameter.

3. The power system stabilization system (1) according to claim 2, **characterized in that** the margin setting unit (3) uses a maximum error between the simple event computation and the event computation as the screening margin.

4. The power system stabilization system (1) according to claim 3, **characterized in that** the margin setting parameter is a parameter for designating a group for which a margin is set, and designating a target for which the margin is set according to at least one of each power transmission line voltage class, each event, each power transmission line, each power transmission line owner, and each time.

5. The power system stabilization system (1) according to claim 4, further comprising an event case screening unit (4) that calculates a screening result by adding a margin to the result of the simple event computation in the power system computation unit (2) with the screening margin as an input.

6. The power system stabilization system (1) according to claim 5, **characterized in that** the event case screening unit (4) screens an event case by using the screening margin calculated by the margin setting unit (3).

7. The power system stabilization system (1) according to claim 6, **characterized in that** the screening result includes the result of the simple event computation and an event case for which detailed computation is required.

8. The power system stabilization system (1) according to claim 7, further comprising an event evaluation unit (5) that receives the screening result as an input, and calculates an event evaluation result when the power system computation unit (2) executes the event computation.

9. The power system stabilization system (1) according to claim 8, **characterized in that** the event computation in the power system computation unit (2) is at least one of power flow computation, circuit computation, transient stability computation, voltage stability computation, and short-circuit computation of a power system.

10. The power system stabilization system (1) according to claim 9, **characterized in that** the simple event computation in the power system computation unit (2) is reducing a number of computation processes of the event computation, and simplifying computation by using at least one of model degeneration, reduction of a number of calculation steps, relaxation of a calculation condition, reduction of computation accuracy, change of numerical accuracy, and creation of a substitute model.

11. The power system stabilization system (1) according to claim 8, further comprising an event countermeasure preparing unit (6) that calculates a countermeasure against an event by using the event evaluation result from the event evaluation unit (5) as an input.

12. The power system stabilization system (1) according to claim 11, further comprising:

an event collation unit (7) that receives a power system state and an event countermeasure as inputs, and collates an event to select the event countermeasure;
a countermeasure execution unit (8) that executes the event countermeasure selected by the event collation unit (7); and
a display unit (93) that displays at least one of input data and output data.

13. The power system stabilization system (1) according to claim 10, further comprising:

an optimization model generation unit (11) that receives the screening margin, the power system state, the power system model, and the event case output by the power system stabilization system (1) as inputs and generates an optimization model having a simplified constraint condition;
an optimization model margin adding unit (12) that adds a margin to the optimization model by using the screening margin of the optimization model generation unit (11); and
an optimization computation unit (13) that calculates a solution of the optimization model.

14. A power system stabilization method for executing a power system stabilization process through calculation of a computer, the method comprising:

a power system computation process of receiving a power system state, a power system model, and an event case as inputs and executing at least one of simple event computation and event computation; and

a margin setting process of receiving a margin setting parameter as an input and calculating a screening margin from a result of the simple event computation and a result of the event computation for an event case that is a computation target in the power system computation process.

# FIG. 1

EP 4 404 408 A1

# FIG. 2

GR1a

GR1b

GR1c

# FIG. 3

1

POWER SYSTEM STABILIZATION SYSTEM

**DB1**

PROGRAM DATABASE

91

INPUT
UNIT

92

CALCULATION
UNIT

93

DISPLAY
UNIT

BD1

**DB2**

DATABASE

94

MEMORY

95

COMMUNICATION
UNIT

96

COMMUNICATION
NETWORK

MEASURING
INSTRUMENT

CONTROL
TERMINAL

97

98

POWER SYSTEM

GR1

# FIG. 4

1

**POWER SYSTEM STABILIZATION SYSTEM**

DB4 — POWER SYSTEM STATE

DB3 — POWER SYSTEM MODEL

DB5 — EVENT CASE

DB6 — MARGIN SETTING PARAMETER

2 — POWER SYSTEM COMPUTATION UNIT

2a — SIMPLE EVENT COMPUTATION FUNCTION

2b — EVENT COMPUTATION FUNCTION

DB7 — INTERNAL POWER SYSTEM MODEL

DB8 — INTERNAL POWER SYSTEM STATE

DB9 — INTERNAL EVENT CASE

3 — MARGIN SETTING UNIT

4 — EVENT CASE SCREENING UNIT

DB10 — SCREENING MARGIN

5 — EVENT EVALUATION UNIT

DB11 — SCREENING RESULT

93 — DISPLAY UNIT

6 — EVENT COUNTERMEASURE PREPARING UNIT

DB12 — EVENT EVALUATION RESULT

DB13 — EVENT COUNTERMEASURE

7 — EVENT COLLATION UNIT

8 — COUNTERMEASURE EXECUTION UNIT

# FIG. 5

START

READ POWER SYSTEM MODEL AND EVENT CASE — S1

PERIODIC CALCULATION {

READ SYSTEM STATE AND MARGIN PARAMETER — S2

SET MARGIN — S3

SCREEN ASSUMED EVENT — S4

EVALUATE ASSUMED EVENT — S5

PREPARE ASSUMED EVENT COUNTERMEASURE — S6

UPDATE ASSUMED EVENT COUNTERMEASURE — S7

DISPLAY — S8

}

END

DURING NORMAL TIMES

START

ACQUIRE STATE OF POWER SYSTEM — S9

COLLATE EVENT — S10

EXECUTE ASSUMED EVENT COUNTERMEASURE — S11

END

AT TIME OF OCCURRENCE OF EVENT

# FIG. 6

```
            ┌──────────────┐
            │    START     │
            └──────┬───────┘
                   │                S31
            ┌──────▼───────────────┐
            │ READ SYSTEM STATE AND │
            │MARGIN SETTING PARAMETER│
            └──────┬───────────────┘
                   │          S32
                 ◇ IS THERE ◇          YES
              ◇ CHANGE IN SYSTEM ◇ ──────────┐
                ◇CONFIGURATION?◇              │
                   │                          │
                  NO                 ┌────────▼──────────┐
                   │                 │  EXECUTE EVENT     │  S33
                   │                 │EVALUATION COMPUTATION│
                   │                 └────────┬──────────┘
                   │                          │
         S37       │                 ┌────────▼──────────┐
                   │                 │ EXECUTE SIMPLE EVENT│  S34
            ┌──────▼───────┐         │EVALUATION COMPUTATION│
            │ READ MARGIN  │         └────────┬──────────┘
            └──────┬───────┘                  │
                   │                 ┌────────▼──────────────┐
                   │                 │CALCULATE DIFFERENCE BETWEEN│  S35
                   │                 │EVENT EVALUATION COMPUTATION│
                   │                 │   AND SIMPLE EVENT      │
                   │                 │EVALUATION COMPUTATION   │
                   │                 └────────┬──────────────┘
                   │                          │
                   │                 ┌────────▼──────────────┐
                   │                 │ CALCULATE MARGIN THAT CAN│
                   │                 │COVER DIFFERENCE BETWEEN EVENT│  S36
                   │                 │ EVALUATION COMPUTATION  │
                   │                 │    AND SIMPLE EVENT     │
                   │                 │EVALUATION COMPUTATION   │
                   │                 └────────┬──────────────┘
                   │◄─────────────────────────┘
         S38       │
            ┌──────▼───────┐
            │OUTPUT MARGIN │
            └──────┬───────┘
                   │
            ┌──────▼───────┐
            │     END      │
            └──────────────┘
```

## FIG. 7

EP 4 404 408 A1

## FIG. 8

Difference [p.u]

Legend:
- ☆ 110kV
- △ 275kV
- ○ 500kV

Event #

| Event # | Margin |
|---------|--------|
| 1 | 15% |
| 2 | 20% |
| 3 | 13% |
| ... | ... |

DB10

EP 4 404 408 A1

EP 4 404 408 A1

## FIG. 9

# FIG. 10

```
        ┌─────────────┐
        │    START    │
        └─────────────┘
               │
               ▼
   ┌───────────────────────┐
   │     READ MARGIN       │──── S41
   └───────────────────────┘
               │
               ▼
   ┌───────────────────────┐
   │ COMPUTE SIMPLE FAILURE │──── S42
   └───────────────────────┘
               │
               ▼
   ┌───────────────────────┐
   │ CORRECT SIMPLE FAILURE │──── S43
   │  COMPUTATION RESULT    │
   └───────────────────────┘
               │
               ▼
   ┌───────────────────────┐
   │ DETERMINE EVENT VIOLATION │──── S44
   │    BY USING MARGIN     │
   └───────────────────────┘
               │
               ▼
   ┌───────────────────────┐
   │ OUTPUT VIOLATION EVENT │──── S45
   └───────────────────────┘
               │
               ▼
        ┌─────────────┐
        │     END     │
        └─────────────┘
```

# FIG. 11

| Event | Fast Event Assessment (DC Power flow) | Event Assessment |
|---|---|---|
| | DB11 | DB12 |
| 1 | OK Worst loading: line 11: 80% (+margin 15%) | OK |
| 2 | Not OK Worst loading: line 12: 85% (+margin 20%) | Not OK Worst loading: line 12: 102% |
| 3 | ... | ... |
| | | |

FIG. 12

GR1

93a

G

G

G

Load Load Load

Difference [p.u]

35

| | 110kV |
| ☆ | 110kV |
| △ | 275kV |
| ○ | 500kV |

0.2
0.15
0.1
0.05

1 2 3 4 5 ...

Event #

DB10

| Event # | Margin |
|---|---|
| 1 | 15% |
| 2 | 20% |
| 3 | 13% |
| ... | ... |

DB11    DB12

| Event | Fast Event Assessment (DC Power flow) | Event Assessment |
|---|---|---|
| 1 | OK Worst loading: line 11: 80% (+margin 15%) | OK |
| 2 | Not OK Worst loading: line 12: 85% (+margin 20%) | Not OK Worst loading: line 12: 102% |
| 3 | ... | ... |
| | | |

EP 4 404 408 A1

## FIG. 13

```
                                        ┌─ 10
                    ┌──────────────────────────────────┐
                    │        CONTROL AMOUNT            │
                    │     CALCULATION SYSTEM           │
                    │                          ┌─ 11   │
   ┌─ 1            │        ┌──────────────────┐       │
┌─────────────┐    │        │   OPTIMIZATION   │       │
│POWER SYSTEM │    │        │      MODEL       │       │
│STABILIZATION│───────────▶│   GENERATION     │       │
│   SYSTEM    │    │        │      UNIT        │       │
└─────────────┘    │        └──────────────────┘       │
                    │                 │        ┌─ 12   │
                    │                 ▼                 │
                    │        ┌──────────────────┐       │
                    │        │   OPTIMIZATION   │       │
                    │        │      MODEL       │       │
                    │        │  MARGIN ADDING   │       │
                    │        │      UNIT        │       │
                    │        └──────────────────┘       │
                    │                 │        ┌─ 13   │
                    │                 ▼                 │
                    │        ┌──────────────────┐       │
                    │        │   OPTIMIZATION   │       │
                    │        │   COMPUTATION    │       │
                    │        │      UNIT        │       │
                    │        └──────────────────┘       │
                    └──────────────────────────────────┘
```

Europäisches
Patentamt

European
Patent Office

Office européen
des brevets

# EUROPEAN SEARCH REPORT

**Application Number**

EP 23 20 4075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TRUJILLO GUAJARDO L A ET AL: "Error compensation in distance relays caused by wind power plants in the power grid", ELECTRIC POWER SYSTEMS RESEARCH, ELSEVIER, AMSTERDAM, NL, vol. 106, 18 September 2013 (2013-09-18), pages 109-119, XP028733884, ISSN: 0378-7796, DOI: 10.1016/J.EPSR.2013.08.009 | 1-11,13, 14 | INV. H02J3/00 H02J13/00 |
| A | * the whole document * | 12 | |
| X | US 2017/025853 A1 (JÓHANSSON HJÖRTUR [IS] ET AL) 26 January 2017 (2017-01-26) | 1-11,13, 14 | |
| A | * figures 1-12 * | 12 | |
| X | US 2021/055839 A1 (CAPUTE RONALD A [US] ET AL) 25 February 2021 (2021-02-25) | 1-11,13, 14 | |
| A | * figures 1-11 * | 12 | |

| | |
|---|---|
| | TECHNICAL FIELDS SEARCHED (IPC) |
| | H02J |

The present search report has been drawn up for all claims

| Place of search | Date of completion of the search | Examiner |
|---|---|---|
| Munich | 22 April 2024 | Telega, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 4075**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-04-2024**

| Patent document cited in search report | | Publication date | Patent family member(s) | | Publication date |
|---|---|---|---|---|---|
| US 2017025853 | A1 | 26-01-2017 | EP | 3127204 A1 | 08-02-2017 |
| | | | US | 2017025853 A1 | 26-01-2017 |
| | | | WO | 2015150577 A1 | 08-10-2015 |
| US 2021055839 | A1 | 25-02-2021 | NONE | | |

EPO FORM P0459

For more details about this annex : see Official Journal of the European Patent Office, No. 12/82

**REFERENCES CITED IN THE DESCRIPTION**

**Patent documents cited in the description**

- US 20170025853 A
- US 20200258168 A
- US 6496757 A